Europäisches Patentamt

European Patent Office

Office européen des brevets

(19)

(11) **EP 1 334 284 B1**

(12) **EUROPÄISCHE PATENTSCHRIFT**

(45) Veröffentlichungstag und Bekanntmachung des Hinweises auf die Patenterteilung:
**12.05.2004  Patentblatt 2004/20**

(51) Int Cl.⁷: **F16C 33/12**, C22C 21/00, B32B 15/01, C23C 30/00

(21) Anmeldenummer: **01989473.2**

(22) Anmeldetag: **15.11.2001**

(86) Internationale Anmeldenummer:
**PCT/EP2001/013219**

(87) Internationale Veröffentlichungsnummer:
**WO 2002/040882 (23.05.2002 Gazette 2002/21)**

(54) **KURBELWELLENLAGERSCHALE**

CRANKSHAFT BEARING SHELL

COUSSINET DE PALIER DE VILEBREQUIN

(84) Benannte Vertragsstaaten:
**AT DE FR GB IT**

(30) Priorität: **15.11.2000  DE 10056579**

(43) Veröffentlichungstag der Anmeldung:
**13.08.2003  Patentblatt 2003/33**

(73) Patentinhaber: **KS Gleitlager GmbH**
**68789 St. Leon-Rot (DE)**

(72) Erfinder:
• **STEFFENS, Thomas**
**74906 Bad Rappenau (DE)**
• **SCHUBERT, Werner**
**69168 Wiesloch (DE)**
• **DEICKE, Klaus**
**74257 Untereisesheim (DE)**
• **KRÄMER, Johann**
**71229 Leonberg (DE)**
• **CLAUS, Jürgen**
**70736 Fellbach (DE)**

(74) Vertreter: **Friz, Oliver**
**Patentanwälte,**
**Dreiss, Fuhlendorf, Steimle & Becker,**
**Postfach 10 37 62**
**70032 Stuttgart (DE)**

(56) Entgegenhaltungen:
EP-A- 0 704 545          WO-A-97/22725
DE-A- 1 521 196          DE-A- 10 035 031
DE-B- 1 191 114          FR-A- 1 484 891
FR-A- 2 775 034          GB-A- 1 433 890

## Beschreibung

Die Erfindung betrifft eine Kurbelwellenlagerschale eines Verbrennungsmotors bei einem Kraftfahrzeug aus einem Stahl/Aluminium-Verbundwerkstoff aus einer Stahlträgerschicht und einer aufplattierten Aluminiumgleitschicht mit Anteilen von Zinn und Kupfer in der Aluminiumgleitschicht, gegebenfalls mit einer zwischengeordneten Reinaluminiumschicht.

WO-A-97/22725 offenbart eine solche Lagerschale. Die Aluminiumgleitschicht ist von einer AlSn23Cul,8-Legierüng mit Zusätzen von 0,6 Gew.-% Mn, 0,23 Gew.-% Fe, 0,17 Gew.-% Co, 0,14 Gew.-% Cr. 0,15 Gew.-% Zr und üblichen Verunreinigungen gebildet. D1 offenbart auch ein Verfahren zum Herstellen einer Lagerschale für Motorwellen, wobei nach dem Walzplattieren der Aluminium-Legierung auf die Stahlträgerschicht zur Bildung der Gleitschicht der Stahl/Aluminium-Verbundwerkstoff vor dem Biegen von Platinenabschnitten auf Halbkreisform einer Wärmebehandlung unterzogen wird.

Kurbelwellenlagerschalen für Kraftfahrzeugverbrennungsmotoren müssen aufgrund der zunehmenden Leistung der Motoren immer höheren Anforderungen an die Ermüdungsfestigkeit gerecht werden, eine hohe Härte und Festigkeit, aber dennoch ausgezeichnete tribologische Eigenschaften aufweisen.

Es sind seit langer Zeit Gleitlagerschalen der gattungsgemäßen Art bekannt, deren Aluminiumgleitschicht aus einer Aluminiumlegierung mit dem Werkstoff-Kurzzeichen AlSn20Cu und der Zusammensetzung

17,5 bis 22,5 Gew.-% Zinn
0,7 bis 1,3 Gew.-% Kupfer
Rest Aluminium

mit gegebenenfalls weiteren Legierungsbestandteilen, nämlich bis zu 0,7 % Silizium, 0,1 % Magnesium, 0,1 % Nickel, 0,2 % Titan, 0,7 % Eisen, 0,7 % Mangan und sonstigen verunreinigungsbedingten Zusätzen von insgesamt weniger als 0,5 % (alle vorstehenden Angaben sind Gew.-%). Die Ermüdungsfestigkeit derartiger Kurbelwellenlagerschalen liegt im Betrieb aber lediglich bei einer maximalen Belastung von 35 bis 45 N/mm$^2$. Diese Ermüdungsfestigkeit ist zu verstehen als Belastung in Folge von Zünd-und Massenkräften, die auf die projizierte Lagerfläche wirken.

Kurbelwellenlagerschalen mit der vorstehenden bekannten Aluminiumgleitschicht können aufgrund des hohen Zinngehalts ohne zusätzliche galvanische Gleitschicht (overlay-frei) eingesetzt werden und haben ausgezeichnete tribologische Eigenschaften. Der verhältnismäßig hohe Zinngehalt führt beim Gießen und Auswalzen des Materials aber zu dicken, langgestreckten zeilenförmigen Zinnausscheidungen, die potentielle Rißbildungsstellen darstellen und demnach nur mittleren Anforderungen an die Ermüdungsfestigkeit im vorstehend angegebenen Bereich gerecht werden.

Aus der EP 0 704 545 A1 ist ein Stahl/Aluminium-Verbundwerkstoff bekannt mit einem Zinngehalt im mittleren Bereich von 14 bis 18 Gew.-% und einem Kupfergehalt von 1,7 bis 2,3 Gew.-% in der Aluminiumgleitschicht. Durch den geringeren Zinngehalt und eine Wärmebehandlung im Bereich von 200 bis 220° C konnte eine höhere Ermüdungsfestigkeit und Belastbarkeit erreicht werden, so dass eine Anwendung des Verbundwerkstoffs als Pleuellager für das große Pleuelauge möglich wurde. Die erforderliche Freßsicherheit für die Verwendung als Kurbelwellenlagerschale wurde aber nicht erreicht, da der Zinngehalt gegenüber der AlSn20Cu-Legierung herabgesetzt wurde.

Die hohen Anforderungen an die Freßsicherheit von Kurbelwellenlagerschalen ergeben sich aus nicht vermeidbaren Fluchtungsfehlern und Formabweichungen bei der Herstellung der Kurbelwelle, trotz aufwendigster Hon- und Finishprozesse der Kurbelwelle und des Lagerstuhls, und deren Auswirkung unter Extremstbelastungen und bei hoher Gleitgeschwindigkeit von über 10 m/s, wie sie in modernen Verbrennungsmotoren auftreten.

Die DE 1 521 196 offenbart die Verwendung einer Aluminiumlegierung mit 10 bis 35, vorzugsweise 18 bis 22% Zinn, 0,5 bis 2% Kupfer und schlägt eine Wärmebehandlung der durch Aufwalzen der Aluminium-Legierung auf einen Stahlrücken erzeugten Bimetallstreifen bei 230° bis 425° C vor. Ein Stahl/Aluminium-Verbundwerkstoff, der bei dieser Temperatur getempert wird, ist gekennzeichnet durch sehr große Zinnausscheidungen. Er weist eine sehr geringe Ermüdungsfestigkeit und geringe Härte auf und wäre zur Herstellung von Kurbelwellenlagerschalen für moderne Verbrennungsmotoren nicht geeignet. Auch der sehr weite Kupfergehalt von 0,5 bis 2% vermag keinen konkreten Gleitlagerwerkstoff zu beschreiben.

Die DD 50319 beschreibt ein Verfahren zur Herstellung von Gleitkörpern aus Aluminium-Legierungen mit Zusätzen bis zu 30% Zinn und 3% Kupfer. Die Erwähnung eines Stahldorns für die Herstellung der Bohrung bei Buchsen und die Erwähnung des unerwünschten Effekts der Schwerkraftseigerung lassen auf ein Stranggießverfahren von Monometallteilen schließen. Die Erwähnung der Zusätze bis zu 30% Zinn und bis zu 30% Kupfer, welch letzteres pauschal zur Härtesteigerung dienen soll, vermag keinen konkreten Aluminiumgleitlagerwerkstoff zu beschreiben. Es findet sich in dieser Druckschrift noch der Hinweis, dass zur Erreichung vertretbarer Ergebnisse bezüglich der Lagerbelastung ein Zinnanteil bis 18% im damaligen Stand der Technik vorgeschlagen wurde.

Hiervon ausgehend liegt der vorliegenden Erfindung die Aufgabe zugrunde, eine Kurbelwellenlagerschale der eingangs genannten Art zu schaffen, die einer Belastung im Betrieb des Motors von deutlich mehr als 55 N/mm$^2$ bei hohen Gleitgeschwindigkeiten von mehr als 10 m/s standzuhalten vermag und die dennoch gute Gleiteigenschaften, wie etwa die eingangs erwähnte Kurbelwellenlagerschale mit einer Gleitschicht aus AlSn20Cu, aufweist.

Diese Aufgabe wird durch eine gattungsgemäße Kurbelwellenlagerschale gelöst, die erfindungsgemäß dadurch gekennzeichnet ist, dass die Aluminiumgleitschicht aus einer AlSn(20-22)Cu(1,9-2,1)-Legierung (1,9 - 2,1 Gew.-% Kupfer und 20 - 22 Gew.-% Zinn), gegebenenfalls mit Zusätzen von bis zu 0,1 Gew.-% Ni, 0,7 Gew.-% Si, 0,7 Gew.-% Fe, 0,7 Gew.-% Mn, 0,2 Gew.-% Ti, wobei Si, Fe und Mn in der Summe < 1 Gew.-% betragen, und verunreinigungsbedingten Zusätzen von insgesamt unterhalb 0,5 Gew.-% gebildet ist und dass die Aluminiumgleitschicht nach einer Wärmebehandlung eine Brinell-Härte von wenigstens 45 HB 1/5/30 aufweist. Die Brinell-Härte wird bestimmt nach DIN ISO 4384 Teil 1 vom Oktober 1982 in Verbindung mit der darin genannten ISO 6506 (entsprechend DIN 50 351).

Gegenüber der bekannten Kurbelwellenlagerschale mit einer Aluminiumgleitschicht aus AlSn20Cu wurde überraschenderweise festgestellt, dass eine Erhöhung des Kupfergehalts in den beanspruchten Bereich von 1,9-2,1 Gew.-% in Verbindung mit einer noch näher zu beschreibenden Wärmebehandlung zu einer Auflösung der sich beim Walzen ergebenden schnur- oder zeilenförmigen Zinnausscheidungen und einer feinen Verteilung des Zinns in Ausscheidungen von überwiegend geringerer Abmessung als 5 μm führt. Auf diese Weise kann ein hoher Zinngehalt von 20 bis 23 Gew.-% in der Gleitschicht und damit verbunden die exzellenten Gleiteigenschaften der bekannten AlSn20Cu-Legierung beibehalten werden, andererseits aber deren Ermüdungsfestigkeit auf eine spezifische Belastung von deutlich über 55 N/mm$^2$, bei einer AlSn20Cu2-Legierung auf 59 N/mm$^2$, gesteigert werden. Die ebenfalls aus der Wärmebehandlung resultierende hohe Härte von wenigstens 45 HB 1/5/30, vorzugsweise wenigstens 47 HB 1/5/30 ist auf die weitgehende Beibehaltung der durch den Walzplattiervorgang erzeugten erwünschten Spannungen durch die Wärmebehandlung bei verhältnismäßig geringen Temperaturen, die nachfolgend erörtert werden, zurückzuführen.

Ferner beträgt die Bruchdehnung $A_5$ der Leichtmetallschicht wenigstens 32 %, ermittelt nach DIN 50 125 (April 1991). Dies bedeutet, daß ein Flachprobenabschnitt der Breite b und der Dicke a in einem Zugversuch so lange gedehnt wird, bis die Probe bricht. Unter der Bruchdehnung wird dann diejenige Dehnung einer Anfangsmeßlänge verstanden, bei der der Flachprobenabschnitt zerreißt. Die Bruchdehnung in Prozent ist also der Quotient aus Verlängerung infolge Dehnung dividiert durch die Ausgangsmeßlänge. Bei der Bruchdehnung $A_5$ wird eine Anfangsmeßlänge L zugrundegelegt, für die in etwa gilt $L = 5,65 \cdot \sqrt{a \cdot b}$. Bei einer Flachprobe einer etwas größeren Gesamtlänge ist es möglich, mehrere Ausgangslängenabschnitte abzutragen und dann denjenigen zur Messung bzw. zur Berechnung der Bruchdehnung heranzuziehen, innerhalb dessen die Probe zerreißt.

Die Bruchdehnung ist im gewalzten Zustand vor einer Wärmebehandlung am geringsten, was bedeutet, daß die Leichtmetall-Lagerschicht zwar sehr hart, aber dadurch bedingt auch sehr spröde ist. Durch eine Wärmebehandlung sollte dieses spröde Verhalten verringert werden, was sich durch eine Erhöhung der Bruchdehnung messen läßt. Vorzugsweise soll die Bruchdehnung $A_5$ der Leichtmetallschicht nach der Wärmebehandlung wenigstens 32 %, vorzugsweise 33 und ganz besonders bevorzugtermaßen nicht über 36 % betragen. Eine Bruchdehnung von 36 % und mehr geht nämlich wiederum einher mit einer Abnahme der Ermüdungsfestigkeit und der Belastbarkeit, die insbesondere durch die Messung der Biegewechselfestigkeit gemessen werden kann.

Es sei betont, dass die Bruchdehnung $A_5$ an Flachprobenabschnitten der Leichtmetallschicht, also nicht an einem Flachprobenabschnitt aus einem Stahl/Aluminium-Verbundwerkstoff, bestimmt wird, da dann die Stahlschicht das Verhalten des Flachprobenabschnitts bei dem Zerreißversuch dominieren würde. Es wird daher eine Leichtmetallschicht aus der Aluminium-Gleitlagerlegierung mit exakt derselben Stichabnahme wie beim Herstellen des Stahl/Aluminium-Verbundwerkstoffs hergestellt. Es wird dann dieselbe Wärmebehandlung durchgeführt und anschließend wird die Leichtmetallschicht dem Zugversuch zur Bestimmung der Bruchdehnung $A_5$ unterzogen.

Die Erfindung betrifft des weiteren ein Verfahren zum Herstellen einer Kurbelwellenlagerschale der erfindungsgemäßen Art, das durch eine Wärmebehandlung des Stahl/Aluminium-Verbundwerkstoffs vor dem Biegen von Platinenabschnitten auf Halbkreisform nach Anspruch 7 gekennzeichnet ist. Nach dem Gießen, Auswalzen und Walzplattieren der Aluminium-Legierung zur Bildung der Gleitschicht auf die Stahlträgerschicht wird eine Wärmebehandlung bei einer Temperatur von 200 bis 220° C, vorzugsweise 200 bis 215° C, für eine Dauer von 2 bis 10 Stunden durchgeführt, wie sie an sich aus EP 0 704 545 A1 bekannt ist. Es wurde indessen seither davon ausgegangen, dass Gleitlagerschalen mit spezifischen Belastungen von deutlich über 55 N/mm$^2$ nur mit mittleren Zinngehalten in der Aluminiumgleitschicht bis ca. 18 Gew.-% erreichbar seien. Es war deshalb überraschend, dass auch bei höheren Zinngehalten und Anwendung der angegebenen Wärmebehandlung die großen zeilenförmigen Zinnausscheidungen in eine feine Verteilung im angegebenen Größenbereich gebracht werden konnten. Die sich beim Walzen ergebenden schnur- oder zeilenförmigen Zinnausscheidungen werden durch die Wärmebehandlung größtenteils in punktförmige Ausscheidungen umgewandelt, deren Ausdehnung überwiegend ≤ 5 μm ist.

Die vorstehend erwähnte Wärmebehandlung ist dahingehend zu verstehen, dass bei einer Wärmebehandlungstemperatur von 200° C eine Wärmebehandlungsdauer von ca. 10 Stunden erforderlich ist, während bei einer Wärmebehandlungstemperatur nahe der oberen Grenze des Intervalls bei 220° C eine Wärmebehandlungsdauer von nur ca. 2 Stunden zu der Verteilung der Zinnausscheidungen führt. Es wird indessen ausdrücklich darauf hingewiesen, dass bei niedrigeren Temperaturen von z. B. 195° C eine Auflösung der durch das Aufwalzen der Gleitschicht erzeugten schnurförmigen Zinnausscheidungen nicht erreicht wird und dass eine Wärmebehandlung bei Temperaturen oberhalb von 220° C wiederum zu einer Koagulation des Zinns zu großen Ausscheidungen führt und sich die Belastbarkeit und Ermüdungsfestigkeit demzufolge extremst verringert. Bei einer Wärmebehandlung bei Temperaturen oberhalb von 220° C werden auch die im Zuge des Walzens und Walzplattierens innerhalb des Materials erzeugten Spannungen, welche die Härte und die Festigkeit der Gleitschicht erhöhen und deshalb erwünscht sind, in negativer und unerwünschter Weise abgebaut.

Durch die angegebene Wärmebehandlung nimmt die Härte der Aluminiumgleitschicht (gemessen in Brinell-Härte nach DIN ISO 4384 Teil 1) um weniger als 15 % ab; die Härte nach der Wärmebehandlung beträgt also wenigstens 85 % der Härte der aufplattierten Aluminiumgleitschicht vor der Wärmebehandlung. Bei einer Glühung oberhalb des angegebenen Temperaturbereichs würden - wie vorstehend erwähnt - die im Zuge des Walzplattieren erzeugten Spannungen weitgehend abgebaut werden, und die Härte würde hierdurch drastisch reduziert werden.

Weitere Einzelheiten, Vorteile und Merkmale der Erfindung ergeben sich aus den beigefügten Patentansprüchen, der beigefügten Figuren und deren nachfolgenden Beschreibung. In der Zeichnung zeigt:

Figur 1    Vergleich der Biegewechselfestigkeit eines bekannten und eines erfindungsgemäßen Stahl/Aluminium-Verbundwerkstoffs für eine Kurbelwellenlagerschale;

Figur 2    Vergleich der Notlaufeigenschaften eines bekannten und eines erfindungsgemäßen Stahl-/Aluminium-Verbundwerkstoffs für eine Kurbelwellenlagerschale;

Figur 3    platinenförmige Prüfabschnitte;

Figur 4    Schliffbildansichten eines erfindungsgemäßen Stahl/AlSn20Cu2-Verbundwerkstoffs und

Figur 5    eine Draufsicht auf eine Flachprobe für die Bestimmung der Bruchdehnung.

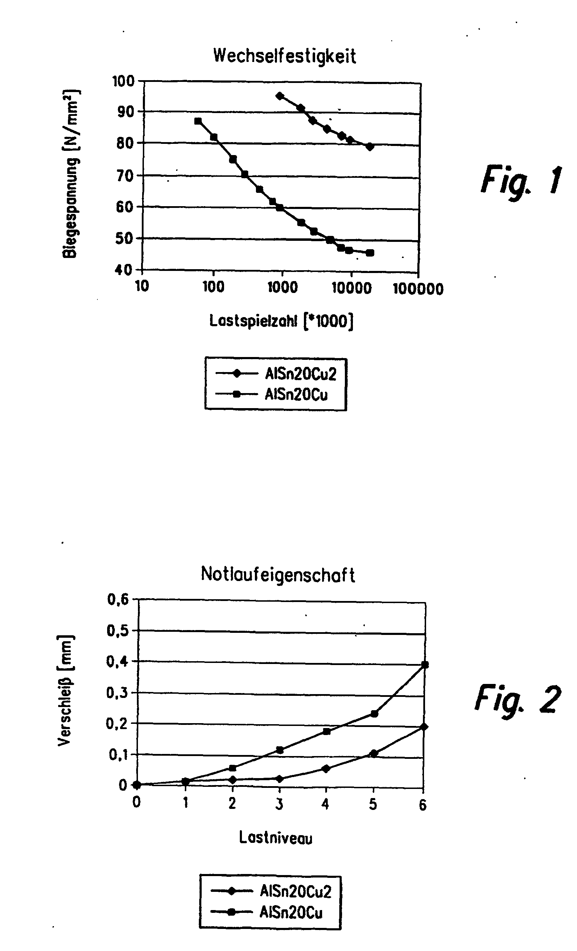

Die Figuren 1 und 2 zeigen Vergleichsmessungen der Biegewechselfestigkeit und der Notlaufeigenschaften eines Stahl/Aluminium-Verbundwerkstoffs, wobei die Aluminiumgleitschicht aus einer AlSn20Cul-Legierung einerseits und aus einer AlSn20Cu2-Legierung andererseits gebildet ist.

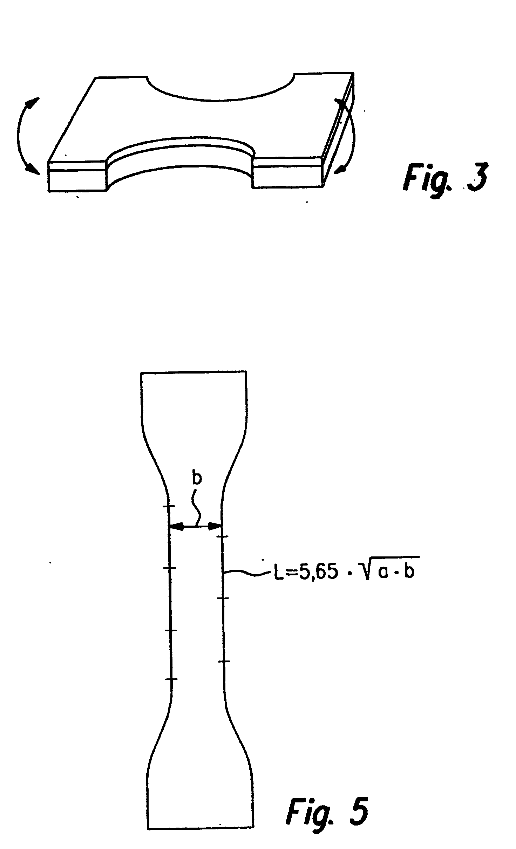

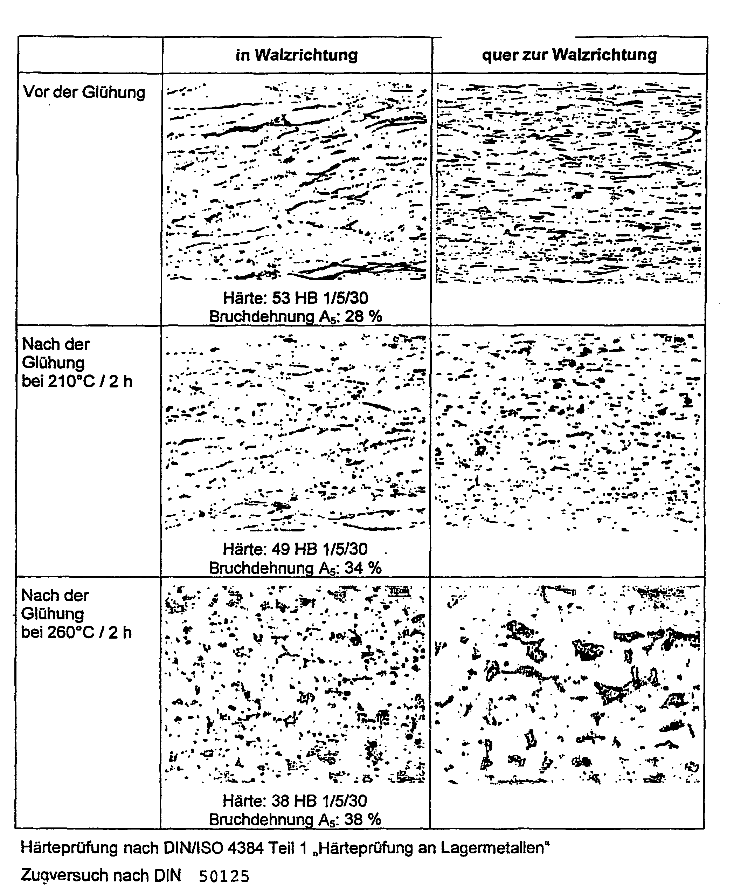

Bei der Messung nach Figur 1 wurden platinenförmige Abschnitte der in der Figur 3 angedeuteten Form aus den jeweiligen Stahl/Aluminium-Verbundwerkstoffen gebildet und an ihren Längsenden in einem Prüfstand eingespannt und dann abwechselnd in die eine bzw. andere Richtung derart weit gebogen, dass sich bei maximaler Beanspruchung eine Biegespannung ergibt, die bei den jeweiligen Versuchsreihen zwischen ca. 47 und 95 N/mm$^2$ variiert wurde. Es wurde dann die jeweilige Lastspielzahl bestimmt, bis zu der keine Beschädigungen an der Platine auftraten. Figur 1 zeigt, dass bei dem bekannten Stahl/Aluminium-Verbundwerkstoff aus einer AlSn20Cul-Legierung die Biegespannung auf unter 50 N/mm$^2$ reduziert werden muss, um eine Laufzeit von 10 Mio. Lastwechseln beschädigungsfrei zu erreichen. Bei dem neuartigen Stahl/Aluminium-Verbundwerkstoff aus einer AlSn20Cu2-Legierung wurde in diesem Testverfahren schon bei knapp unterhalb 80 N/mm$^2$ eine Laufdauer von 10 Mio. Lastwechseln erreicht.

Figur 2 zeigt Messreihen, bei denen der Verschleiß bei sechs verschiedenen Lastniveaus unter Mangelschmierung zur Ermittlung der Notlaufeigenschaften gemessen wurden.

Die Notlaufeigenschaften wurden in einem Stift/Scheibe-Versuch unter den folgenden Prüfbedingungen ermittelt:

| Prüfbedingungen: | |
| --- | --- |
| Mangelschmierung | 7 mg/min |
| Gleitgeschwindigkeit | 5 / 5 / 6 / 7 / 8 / 9 m/sec |
| Flächenpressung | 5 / 6,5 / 8,0 / 9,5 / 11,0 / 12,5 N/mm$^2$ |

Nach einer bestimmten Zeit von 15 min wurden bei den jeweiligen Lastniveaus der Verschleiß am Stift, dessen Stirnseite von der Aluminium-Gleitschicht des getesteten Stahl/Aluminium-Verbundwerkstoffs gebildet ist, gemessen. Die Ergebnisse zeigt Figur 2. Bei dem erfindungsgemäßen Stahl/Aluminium-Verbundwerkstoff war der Verschleiß etwa um die Hälfte reduziert.

Die Figur 4 zeigt Schliffbilder der Aluminiumgleitschicht eines erfindungsgemäßen Stahl/Alu-Verbundwerkstoffs mit einer AlSn20Cu2-Legierung in einer Ebene senkrecht zur Walzrichtung (rechts) bzw. in einer Ebene, welche die Walzrichtung einschließt (links) (vor der Wärmebehandlung (oben) bzw. nach der Wärmebehandlung bei 210° Celsius (Mitte). Ferner dargestellt sind entsprechende Schliffbilder derselben Gleitschicht nach einer Wärmebehandlung bei 260° Celsius (unten). Durch die Wärmebehandlung wurden die in Figur 4 links oben ersichtlichen schnuroder zeilenförmigen Zinnausscheidungen, die in Folge des Auswalzens des Werkstoffs gebildet werden, überwiegend aufgelöst. Die Härte der Aluminiumgleitschicht betrug nach dem Aufplattieren 53 HB 1/5/30 und nach der sich hieran anschließenden Wärmebehandlung 49 HB 1/5/30. Nach einer Wärmebehandlung oberhalb von 220°C werden die Spannungen, die im Zuge des Walzplattierens erzeugt wurden zunehmend aufgelöst, so dass nach der Wärmebehandlung bei 260°C für 2 Stunden schon eine Reduzierung auf 38 HB 1/5/39 resultierte, was für Hauptlagerschalenanwendungen nicht akzeptabel ist. Man erkennt auch die sich ergebenden groben Zinnausscheidungen, die potentielle Rissbildungsstellen darstellen und die Ermüdungsfestigkeit für die genannte Anwendung auf nicht hinnehmbare Werte herabsetzen.

Des weiteren sind Bruchdehnungswerte $A_5$ bei den jeweiligen Werkstoffen, so wie eingangs beschrieben, angegeben. Dabei wurde eine Aluminiumgleitschicht aus AlSn20Cu2 mit derselben Stichabnahme wie beim Verbundwerkstoff gewalzt, und dann wurden Flachprobenabschnitte der in Figur 5 skizzierten Art angefertigt. Die Flachprobenabschnitte aus der Gleitlagerlegierung hatten eine Breite von 20 mm und eine Dicke von 0,5 mm. Diese Dicke entspricht auch der Schichtdicke der Aluminiumgleitschicht bei einem Stahl/Aluminium-Verbundwerkstoff. Es wurden dann beidseits des Flachprobenabschnitts Längsabschnitte einer Anfangsmeßlänge L von $5,65 \sqrt{20 \cdot 0,5}$ mm abgetragen. Es wurde dann gedehnt bis zur Bruchgrenze und die Bruchdehnung als Quotient der Dehnung dividiert durch die Ausgangsmeßlänge in Prozent angegeben. Bei der ausgewalzten Aluminiumgleitlagerlegierung wurde eine Bruchdehnung $A_5$ von 28 % gemessen. Nach einer Glühung von 210 °C für zwei Stunden wurde das Material weniger spröde und die gemessene Bruchdehnung $A_5$ lag bei 34 %. Bei einer Wärmebehandlung bei 260° C für zwei Stunden, wie sie vorstehend erörtert wurde, lag die Bruchdehnung $A_5$ bei 38 %. Die hiermit erreichbare Ermüdungsfestigkeit oder Biegewechselfestigkeit ist jedoch für Kurbelwellenlagerschalenanwendungen nicht ausreichend.

Insgesamt wurde mit der Erfindung ein Stahl/Aluminium-Verbundwerkstoff geschaffen, der sich hervorragend für die Herstellung von Kurbelwellenlagerschalen eignet, da er im Hinblick auf Härte, Verschleiß, Ermüdungsfestigkeit und tribologische Eigenschaften den hier gestellten Anforderungen in höherem Maße gerecht wird als bekannte Werkstoffe.

**Patentansprüche**

1. Kurbelwellenlagerschale eines Verbrennungsmotors bei einem Kraftfahrzeug, aus einem Stahl/Aluminium-Verbundwerkstoff mit einer Stahlträgerschicht und einer aufplattierten Aluminiumgleitschicht mit Anteilen von Zinn und Kupfer in der Aluminiumgleitschicht, gegebenenfalls mit einer zwischengeordneten Reinaluminiumschicht, **dadurch gekennzeichnet, dass** die Aluminiumgleitschicht von einer AlSn(20-22)Cu(1,9-2,1)-Legierung, gegebenenfalls mit Zusätzen von bis zu 0,1 Gew.-% Ni, 0,7 Gew.-% Si, 0,7 Gew.-% Fe, 0,7 Gew.-% Mn, 0,2 Gew.-% Ti, wobei Si, Fe und Mn in der Summe < 1 Gew.-% betragen, und verunreinigungsbedingten Zusätzen von insgesamt unterhalb 0,5 Gew.-% gebildet ist und dass die Aluminiumgleitschicht nach einer Wärmebehandlung eine Brinell-Härte von wenigstens 45 HB 1/5/30 aufweist.

2. Kurbelwellenlagerschale nach Anspruch 1, **dadurch gekennzeichnet, dass** die Aluminiumgleitschicht eine Brinell-Härte von wenigstens 46 HB 1/5/30 aufweist.

3. Kurbelwellenlagerschale nach Anspruch 2, **dadurch gekennzeichnet, dass** die Aluminiumgleitschicht eine Brinell-Härte von wenigstens 47 HB 1/5/30 aufweist.

4. Kurbelwellenlagerschale nach Anspruch 3, **dadurch gekennzeichnet, dass** die Aluminiumgleitschicht eine Brinell-Härte von wenigstens 48 HB 1/5/30 aufweist.

5. Kurbelwellenlagerschale nach einem der vorstehenden Ansprüche, **dadurch gekennzeichnet, dass** das Zinn in Form fein verteilter Ausscheidungen mit einer Größe von < 5 µm vorliegt.

6. Kurbelwellenlagerschale nach einem der vorstehenden Ansprüche, **dadurch gekennzeichnet, dass** die Aluminiumgleitschicht eine Dicke von 0,15 bis 1 mm, vorzugsweise von 0,2 - 1 mm aufweist.

7. Verfahren zum Herstellen einer Kurbelwellenlagerschale nach einem der vorstehenden Ansprüche, **dadurch gekennzeichnet, dass** nach dem Walzplattieren der Aluminium-Legierung zur Bildung der Gleitschicht auf die Stahlträgerschicht der Stahl/Aluminium-Verbundwerkstoff vor dem Biegen von Platinenabschnitten auf Halbkreisform einer Wärmebehandlung unterzogen wird, und zwar bei einer Temperatur von 200 bis 220° C für eine Dauer von 2 bis 10 Stunden.

8. Kurbelwellenlagerschale nach Anspruch 1 oder 2, hergestellt aus einem bei einer Temperatur von 200 bis 220° C für eine Dauer von 2 bis 10 Stunden wärmebehandelten Verbundwerkstoff.

**Claims**

1. Crankshaft bearing shell of a combustion engine for a motor vehicle, consisting of a steel/aluminium composite material having a steel support layer and a plated aluminium guiding layer with amounts of tin and copper in the aluminium guiding layer, possibly with an intermediate layer of pure aluminium, **characterised in that** the aluminium guiding layer is formed from an AlSn (20-22) Cu (1.9-2.1) alloy, possibly with additions of up to 0.1% by weight of Ni, 0.7% by weight of Si, 0.7% by weight of Fe, 0.7% by weight of Mn, 0.2% by weight of Ti, whereby Si, Fe and Mn in total amount to < 1% by weight and impurity-related additions in total of less than 0.5% by weight and wherein the aluminium guiding layer has a Brinell hardness of at least 45 HB 1/5/30 after heat treatment.

2. Crankshaft bearing shell according to Claim 1, **characterised in that** the aluminium guiding layer has a Brinell hardness of at least 46 HB 1/5/30.

3. Crankshaft bearing shell according to Claim 2, **characterised in that** the aluminium guiding layer has a Brinell hardness of at least 47 HB 1/5/30.

4. Crankshaft bearing shell according to Claim 3, **characterised in that** the aluminium guiding layer has a Brinell hardness of at least 48 HB 1/5/30.

5. Crankshaft bearing shell according to any one of the above claims, **characterised in that** the tin is present in the form of finely-dispersed exudations with a dimension of < 5 μm.

6. Crankshaft bearing shell according to any one of the above claims, **characterised in that** the aluminium guiding layer has a thickness of 0.15 to 1 mm, preferably of 0.2 - 1 mm.

7. Method of manufacturing a crankshaft bearing shell according to any one of the above claims, **characterised in that** after roller plating of the aluminium alloy to form the guiding layer on the steel support layer the steel/aluminium composite material before bending of plate sections to semi-circular shape is subjected to heat treatment, and to be precise at a temperature of 200 to 220° C for a duration of 2 to 10 hours.

8. Crankshaft bearing shell according to Claim 1 or 2, manufactured from a composite material heat-treated at a temperature of 200 to 220° C for a duration of 2 to 10 hours.

**Revendications**

1. Coussinet de palier de vilebrequin de moteur à combustion d'un véhicule, réalisé en matériau composite acier/aluminium, avec une couche support en acier et, plaquée sur ladite couche support, une couche de glissement en aluminium comportant des particules d'étain et de cuivre, une couche d'aluminium pur pouvant éventuellement être intercalée entre la couche support et la couche de glissement, **caractérisé en ce que** la couche de glissement en aluminium est composée d'un alliage AlSn (20-22) Cu (1,9-2,1), éventuellement avec addition de jusqu'à 0,1 % en poids de Ni, 0,7 % en poids de Si, 0,7 % en poids de Fe, 0,7 % en poids de Mn, 0,2 % en poids de Ti, la somme des teneurs en Si, Fe et Mn étant inférieure à 1 % en poids, et de produits additionnels résultant d'impuretés et représentant au total moins de 0,5 % en poids, et **en ce que** la couche de glissement en aluminium présente, après traitement thermique, une dureté Brinell d'au moins 45 HB 1/5/30.

2. Coussinet de palier de vilebrequin selon la revendication 1, **caractérisé en ce que** la couche de glissement en aluminium présente une dureté Brinell d'au moins 46 HB 1/5/30.

3. Coussinet de palier de vilebrequin selon la revendication 2, **caractérisé en ce que** la couche de glissement en aluminium présente une dureté Brinell d'au moins 47 HB 1/5/30.

4. Coussinet de palier de vilebrequin selon la revendication 3, **caractérisé en ce que** la couche de glissement en aluminium présente une dureté Brinell d'au moins 48 HB 1/5/30.

**5.** Coussinet de palier de vilebrequin selon l'une. quelconque des revendications précédentes, **caractérisé en ce que** l'étain est présent sous la forme de précipités finement dispersés de taille inférieure à 5 μm.

**6.** Coussinet de palier de vilebrequin selon l'une quelconque des revendications précédentes, **caractérisé en ce que** l'épaisseur de la couche de glissement en aluminium est comprise entre 0,15 et 1 mm et de préférence entre 0,2 et 1 mm.

**7.** Procédé de fabrication d'un coussinet de palier de vilebrequin selon l'une quelconque des revendications précédentes, **caractérisé en ce qu'**après placage par laminage de l'alliage d'aluminium pour former la couche de glissement sur la couche support en acier et avant cintrage des portions de plaque selon une forme semi-circulaire, le matériau composite acier/aluminium est soumis pendant 2 à 10 heures à un traitement thermique à une température comprise entre 200 et 220 °C.

**8.** Coussinet de palier de vilebrequin selon la revendication 1 ou 2, fabriqué à partir d'un matériau composite soumis pendant à 2 à 10 heures à un traitement thermique à une température comprise entre 200 et 220 °C.

## Wechselfestigkeit

**Fig. 1**

## Notlaufeigenschaft

**Fig. 2**

*Fig. 3*

$$L = 5{,}65 \cdot \sqrt{a \cdot b}$$

*Fig. 5*

| | in Walzrichtung | quer zur Walzrichtung |
|---|---|---|
| Vor der Glühung |  Härte: 53 HB 1/5/30  Bruchdehnung $A_5$: 28 % | |
| Nach der Glühung bei 210°C / 2 h |  Härte: 49 HB 1/5/30  Bruchdehnung $A_5$: 34 % | |
| Nach der Glühung bei 260°C / 2 h |  Härte: 38 HB 1/5/30  Bruchdehnung $A_5$: 38 % | |

Härteprüfung nach DIN/ISO 4384 Teil 1 „Härteprüfung an Lagermetallen"

Zugversuch nach DIN 50125